# EUROPEAN PATENT SPECIFICATION

(11) **EP 4 065 520 B1**
(45) Date of publication and mention of the grant of the patent: **27.03.2024**
(21) Application number: 20815907.9
(22) Date of filing: 20.11.2020
(51) Int. Cl.: C02F 3/02, C02F 3/34, C02F 5/10, C11D 3/38

(54) **COMPOSITION AND METHOD FOR URIC ACID REMOVAL**
ZUSAMMENSETZUNG UND VERFAHREN ZUR ENTFERNUNG VON URSÄURE
COMPOSITION ET MÉTHODE D'ÉLIMINATION DE L'ACIDE URIQUE

(30) Priority: 27.11.2019 GB 201917248
(43) Date of publication of application: 05.10.2022
(73) Proprietor: ADVANCED BACTERIAL SCIENCES LIMITED, Loughton, Essex LG10 4LG (GB)
(72) Inventor: HOLDBROOK, Robert, Loughton Essex LG10 4LG (GB); BIRCH, Robert, Loughton Essex LG10 4LG (GB)
(74) Representative: Murgitroyd & Company
(86) International application number: PCT/GB2020/052970
(87) International publication number: WO 2021/105653

(56) References cited:
- DE-A1-102009 003 027
- GB-A- 2 362 814
- KR-A- 20110 087 656
- US-A1- 2009 263 884

## Description

This invention relates to a composition useful in the removal of uric acid from urinal waste pipes, as well as a method of using such a composition.

### Background

The provision of cleaning services to public buildings, offices and the like is a highly competitive industry. Cost savings are therefore continuously sought. One way in which costs, and water consumption, have been reduced is the replacement of conventional urinals in men's washrooms with either low-flush or waterless urinals.

Compositions suitable for cleaning toilets are disclosed in DE 10 2009 003027 A1, KR 2011 0087656 A, US 2009/263884 A1 and GB 2 362 814 A.

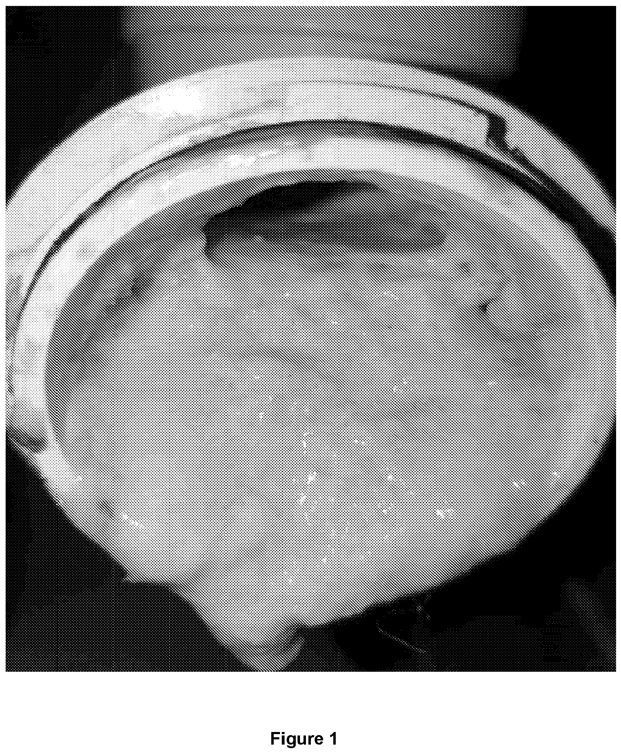

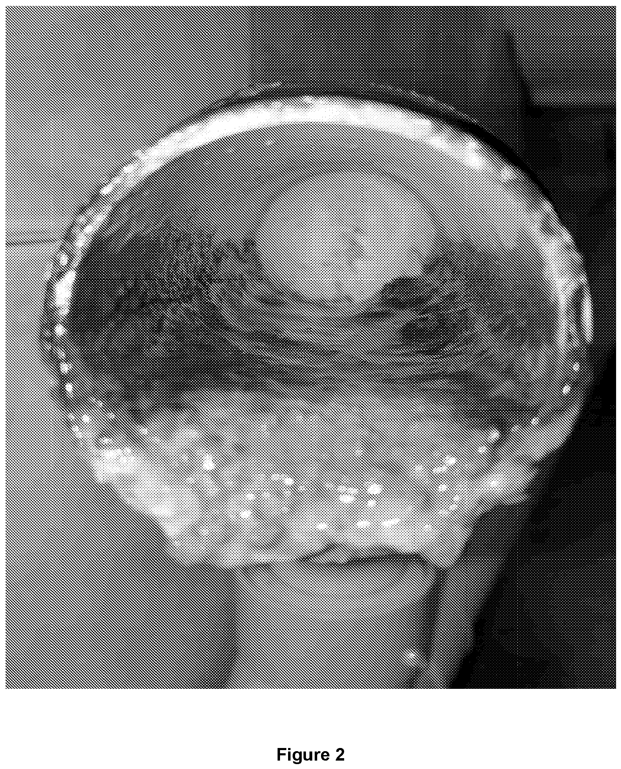

A problem with low-flush and waterless urinals is that the reduced amount of water used results in the build-up of uric acid in urinal waste pipes. This can then cause undesirable odours and blockages in the waste pipes. Figures 1 and 2 show two examples of uric acid build-up in urinal waste pipes.

The blockages in urinal waste pipes generally comprise two main components:
(i) an organic component (around 30 wt%) comprising human uric acid waste which has been passed through the body, and
(ii) an inorganic component (around 70 wt%) comprising mineral scale, the scale mainly comprising struvite, calcium carbonate and apatite.

To deal with this problem, cleaning services companies use increasingly corrosive chemicals to remove any blockages. However, the use of such chemicals is undesirable both from an environmental and a social responsibility perspective.

Improved compositions and methods for deal with uric acid blockages have been sought.

### Statement of invention

This invention relates to a composition comprising:
(a) 10-20 wt% acidifying bacteria,
(b) 30-40 wt% of an oxidising agent,
(c) 5-15 wt% of an organic acid, and
(d) 1-10 wt% of a chelating agent.

In has been surprisingly found by the inventors that acidifying bacteria can digest organic waste because it is a food source for the bacteria. This digestion will take place as long as the environment is optimised for bacterial incubation, germination, replication and digestion. This can be achieved in the present invention with the introduction of oxygen within the composition via the inclusion of an oxidising agent. The inorganic component can be removed by inclusion of an organic acid and a chelating agent. In this way, the invention seeks to provide an effective product which also uses non-toxic chemicals and is therefore eco-friendly.

The composition of the invention seeks to provide two benefits:
(i) Digestion - the composition can digest legacy uric acid build up existing with the urinal waste pipe
(ii) Prevention - the composition can digest and soften the uric acid within urine as it enters the urinal

In particular, the composition may be a solid, more particularly a powder or granules.

More particularly, the acidifying bacteria may be non-pathogenic. In particular, the acidifying bacteria may be at least partially dehydrated. For example, the acidifying bacteria may by lyophilised. More particularly, the acidifying bacteria may comprise *bacillus* bacteria or *lactobacillus* bacteria. In particular, the *bacillus* bacteria or *lactobacillus* bacteria may comprise *Lactobacillus plantarum,* Lactobacillus acidophilus, *Lactobacillus lactis,* and/or *Bacillus subtilis.* More particularly, the bacteria may comprise Lactobacillus plantarum. More particularly, the acidifying bacteria may be present in an amount of 10-20 wt%, even more particularly 13-17 wt%, more particularly about 15 wt%.

More particularly, the composition may comprise lactose. In particular, the composition may comprise lactose in an amount of 10-20 wt%, more particularly 13- 17 wt%, even more particularly about 15 wt%.

In particular, the composition may comprise glucose and/or dextrose. More particularly, the composition may comprise glucose and/or dextrose in an amount of 10-20 wt%, even more particularly 13-17 wt%, even more particularly about 15 wt%.

More particularly, the composition may comprise an organic acid in an amount of 8-12 wt%, even more particularly about 10 wt%. In particular, the organic acid may be citric acid and/or lactic acid.

More particularly, the composition may comprise an oxidising agent in an amount of 33-37 wt%, even more particularly about 35 wt%. In particular, the oxidising agent comprises sodium carbonate and/or sodium percarbonate. More particularly the oxidising agent may be a combination of 10-20 wt% sodium carbonate and 15-25 wt% sodium percarbonate, even more particularly 13-17 wt% sodium carbonate and 18-22 wt% sodium percarbonate, more particularly about 15 wt% sodium carbonate and about 20 wt% sodium percarbonate.

More particularly, the composition may comprise a chelating agent. In particular, the composition may comprise a chelating agent in an amount of 3-7 wt%, more particularly about 5 wt%. In particular, the chelating agent may be EDTA, trisodium dicarboxymethyl alaninate, polyaspartic acid and/or L-Glutamic acid N,N- diacetic acid. More particularly, the chelating agent may be L-Glutamic acid N,N- diacetic acid.

In particular, the composition may comprise a biodegradable dye. More particularly, the composition may comprise a biodegradable dye in an amount of 1-5 wt%, even more particularly about 3 wt%. More particularly, the composition may comprise a fragrance, even more particularly in an amount of 2 wt% or less.

The non-bacterial components of the composition are understood to help to break down the inorganic component of any blockage and release trapped nutrients for the acidifying bacteria.

This invention also relates to a method of removing uric acid from a waste pipe, more particularly a urinal waste pipe, comprising the step of inserting the composition as described above into the waste pipe.

This invention will be further described by reference to the following Figures which are not intended to limit the scope of the invention claimed, in which:
**Figure 1** shows a first example of uric acid build-up in a urinal waste pipe,
**Figure 2** shows a second example of uric acid build-up in a urinal waste pipe,
**Figure 3** shows a bar chart of uric acid blockage degradation of a composition according to the invention compared with a control sample,
**Figure 4** shows an experimental set-up used to test the breakdown in uric acid that would occur once the hydraulic action of urination is accounted for.
**Figure 5** shows a bar chart of uric acid blockage degradation of a composition according to the invention compared with a control sample utilising the set-up of Figure 4.

### Examples

### Example 1

A composition according to the invention was prepared by blending the following components in the amounts mentioned below:
15 wt% *lactobacillus plantarum*
15 wt% Lactose
15 wt% glucose
15 wt% sodium carbonate
20 wt% sodium percarbonate
10 wt% citric acid,
5 wt% L-Glutamic acid N,N-diacetic acid
3 wt% biodegradable dye
2 wt% fragrance

Samples of uric acid blockage were weighed and dried overnight (30 °C) in a 30 ml disposable urine sample pot. 1 gram of the composition according to the invention was added, along with 10 ml of water. Control samples were also prepared, which involved adding 10 ml of water with no product. There were 3 x repeats of each treatment (the invention or control). Treatment was left overnight, and the next day water was drained through a fine mesh that blocked the passage of solid uric acid scale. After the experiment, samples were dried overnight (30 °C), and then weighed.

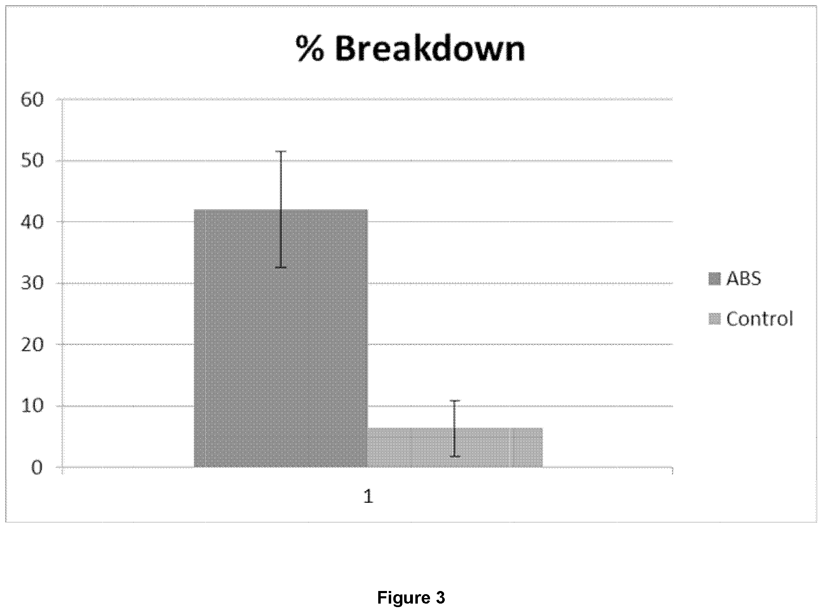

Figure 3 shows the percentage weight loss in the uric acid samples after treatment, compared to the starting weight. The invention showed efficiency in breaking down uric acid (the samples labelled "ABS", 35 wt%-52 wt%) while the addition of water (i.e. the control samples) only broke down 5 wt%-12 wt%.

### Example 2

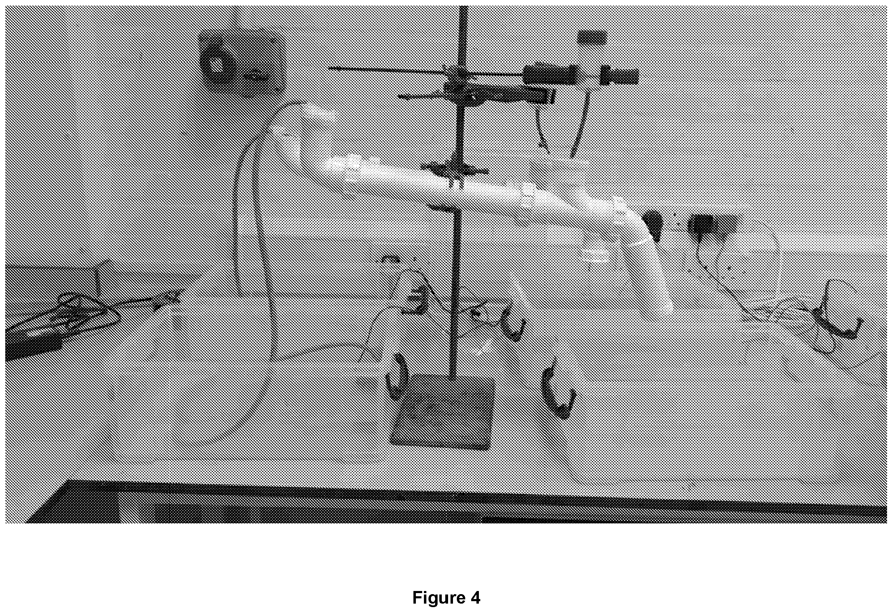

Samples of uric acid blockage were weighed and dried for 8 hours (60 °C) in a 60 ml disposable plastic pot. The samples were then placed in a laboratory set-up designed to emulate pipework in men's urinals (see Figure 4). 1 gram of the composition of Example 1 was added, and 50 ml water was dripped onto the combined uric acid blockage and the inventive composition to provide moisture. This was left overnight. Control samples involved dripping water onto the uric acid blockage with no product added. The next day a urination simulation machine was run 60 times to emulate the hydraulic force that the blockage would experience in a real life setting. The experiment was run daily for 3 days. After the experiment, samples were dried for 8 hours (60°C), and then weighed.

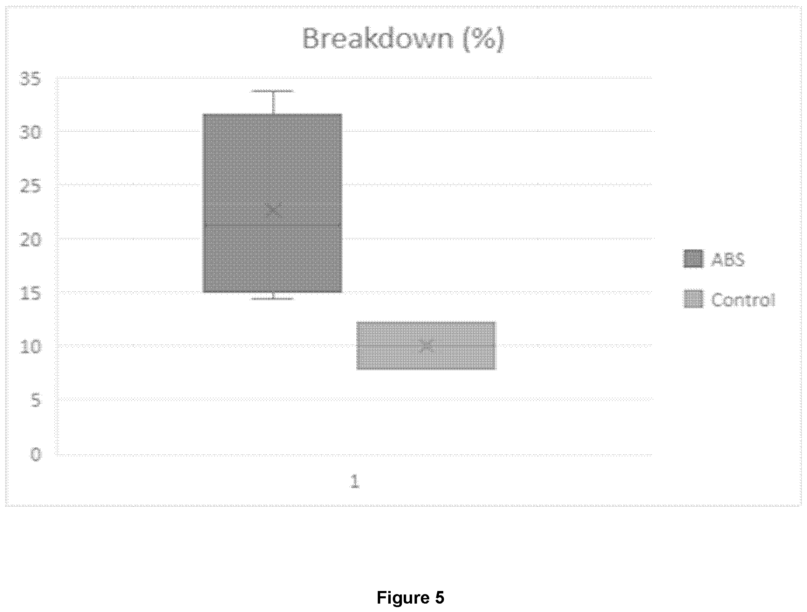

Figure 5 shows the percentage weight loss in the uric acid samples after treatment, compared to the starting weight. The invention showed efficiency in breaking down uric acid (the samples labelled "ABS", 15 wt%-30 wt%) while the addition of water (i.e. the control samples) only broke down 7 wt%-12 wt%.

## Claims

1. A composition comprising:
(a) 10-20 wt% acidifying bacteria,
(b) 30-40 wt% of an oxidising agent,
(c) 5-15 wt% of an organic acid, and
(d) 1-10 wt% of a chelating agent.

2. A composition as claimed in claim 1, wherein the acidifying bacteria comprises *lactobacillus* bacteria.

3. A composition as claimed in claim 1 or claim 2, wherein the acidifying bacteria comprises *Lactobacillus plantarum.*

4. A composition as claimed in any one of the preceding claims comprising acidifying bacteria in an amount of 13-17 wt%.

5. A composition as claimed in any one of the preceding claims, wherein the acidifying bacteria is lyophilised.

6. A composition as claimed in any one of the preceding claims comprising an oxidising agent in an amount of 33-37 wt%.

7. A composition as claimed in any one of the preceding claims, wherein the oxidising agent comprises sodium carbonate and/or sodium percarbonate.

8. A composition as claimed in claim 7 comprising 10-20 wt% sodium carbonate and 15-25 wt% sodium percarbonate.

9. A composition as claimed in any one of the preceding claims comprising the organic acid in an amount of 8-12 wt%.

10. A composition as claimed in any one of the preceding claims, wherein the organic acid comprises citric acid.

11. A composition as claimed in any one of the preceding claims comprising the chelating agent in an amount of 3-7 wt%.

12. A composition as claimed in any one of the preceding claims, wherein the chelating agent comprises L-Glutamic acid N,N-diacetic acid.

13. A composition as claimed in any one of the preceding claims, wherein the composition is a powder.

14. A method of removing uric acid from a waste pipe comprising the step of inserting the composition as claimed in any one of the preceding claims into the waste pipe.

15. A method as claimed in claimed 14, wherein the waste pipe is a urinal waste pipe.

## Patentansprüche

1. Eine Zusammensetzung, die Folgendes beinhaltet:
(a) zu 10-20 Gew.-% säuernde Bakterien,
(b) zu 30-40 Gew.-% ein Oxidationsmittel,
(c) zu 5-15 Gew.-% eine organische Säure, und
(d) zu 1-10 Gew.-% Chelatbildner.

2. Zusammensetzung gemäß Anspruch 1, wobei die säuernden Bakterien *Lactobacillus-*Bakterien beinhalten.

3. Zusammensetzung gemäß Anspruch 1 oder Anspruch 2, wobei die säuernden Bakterien *Lactobacillus plantarum* beinhalten.

4. Zusammensetzung gemäß einem der vorhergehenden Ansprüche, die säuernde Bakterien in einer Menge von 13-17 Gew.-% beinhaltet.

5. Zusammensetzung gemäß einem der vorhergehenden Ansprüche, wobei die säuernden Bakterien lyophilisiert sind.

6. Zusammensetzung gemäß einem der vorhergehenden Ansprüche, die ein Oxidationsmittel in einer Menge von 33-37 Gew.-% beinhaltet.

7. Zusammensetzung gemäß einem der vorhergehenden Ansprüche, wobei das Oxidationsmittel Natriumcarbonat und/oder Natriumpercarbonat beinhaltet.

8. Zusammensetzung gemäß Anspruch 7, die zu 10-20 Gew.-% Natriumcarbonat und zu 15-25 Gew.-% Natriumpercarbonat beinhaltet.

9. Zusammensetzung gemäß einem der vorhergehenden Ansprüche, die die organische Säure in einer Menge von 8-12 Gew.-% beinhaltet.

10. Zusammensetzung gemäß einem der vorhergehenden Ansprüche, wobei die organische Säure Zitronensäure beinhaltet.

11. Zusammensetzung gemäß einem der vorhergehenden Ansprüche, die den Chelatbildner in einer Menge von 3-7 Gew.-% beinhaltet.

12. Zusammensetzung gemäß einem der vorhergehenden Ansprüche, wobei der Chelatbildner L-Glutaminsäure-N,N-Diessigsäure beinhaltet.

13. Zusammensetzung gemäß einem der vorhergehenden Ansprüche, wobei die Zusammensetzung ein Pulver ist.

14. Ein Verfahren zur Entfernung von Harnsäure aus einem Abwasserrohr, das den Schritt des Einbringens der Zusammensetzung gemäß einem der vorhergehenden Ansprüche in das Abwasserrohr beinhaltet.

15. Verfahren gemäß Anspruch 14, wobei das Abwasserrohr ein Urinal-Abwasserrohr ist.

## Revendications

1. Une composition comprenant :
(a) de 10 à 20 % en poids de bactérie acidifiante,
(b) de 30 à 40 % en poids d'un agent oxydant,
(c) de 5 à 15 % en poids d'un acide organique, et
(d) de 1 à 10 % en poids d'un agent chélateur.

2. Une composition telle que revendiquée dans la revendication 1, où la bactérie acidifiante comprend la bactérie *lactobacillus.*

3. Une composition telle que revendiquée dans la revendication 1 ou la revendication 2, où la bactérie acidifiante comprend *Lactobacillus plantarum.*

4. Une composition telle que revendiquée dans l'une quelconque des revendications précédentes comprenant une bactérie acidifiante dans une quantité allant de 13 à 17 % en poids.

5. Une composition telle que revendiquée dans l'une quelconque des revendications précédentes, où la bactérie acidifiante est lyophilisée.

6. Une composition telle que revendiquée dans l'une quelconque des revendications précédentes comprenant un agent oxydant dans une quantité allant de 33 à 37 % en poids.

7. Une composition telle que revendiquée dans l'une quelconque des revendications précédentes, où l'agent oxydant comprend du carbonate de sodium et/ou du percarbonate de sodium.

8. Une composition telle que revendiquée dans la revendication 7 comprenant de 10 à 20 % en poids de carbonate de sodium et de 15 à 25 % en poids de percarbonate de sodium.

9. Une composition telle que revendiquée dans l'une quelconque des revendications précédentes comprenant l'acide organique dans une quantité allant de 8 à 12 % en poids.

10. Une composition telle que revendiquée dans l'une quelconque des revendications précédentes, où l'acide organique comprend de l'acide citrique.

11. Une composition telle que revendiquée dans l'une quelconque des revendications précédentes comprenant l'agent chélateur dans une quantité allant de 3 à 7 % en poids.

12. Une composition telle que revendiquée dans l'une quelconque des revendications précédentes, où l'agent chélateur comprend l'acide L-glutamique acide N,N-diacétique.

13. Une composition telle que revendiquée dans l'une quelconque des revendications précédentes, la composition étant une poudre.

14. Un procédé d'élimination d'acide urique dans un tuyau d'évacuation comprenant l'étape consistant à insérer la composition telle que revendiquée dans l'une quelconque des revendications précédentes jusque dans le tuyau d'évacuation.

15. Un procédé tel que revendiqué dans la revendication 14, où le tuyau d'évacuation est un tuyau d'évacuation d'urinoir.
